# EUROPEAN PATENT APPLICATION

(11) **EP 2 290 578 A1**
(43) Date of publication of application: **02.03.2011**
(21) Application number: 10171478.0
(22) Date of filing: 30.07.2010
(51) Int. Cl.: G06F 21/24

(54) **Method and system to configure security rights based on contextual information**

(30) Priority: 25.08.2009 US 546710
(71) Applicant: Business Objects Software Limited, Dublin 1 (IE)
(72) Inventor: Gaulin, Pascal, D-69190,Walldorf (DE); Marinescu, Dan Cristian, D-69190 Walldorf (DE); Perdigeon, Stephane, D-69190 Walldorf (DE)
(74) Representative: Kazi, Ilya

(57) **Abstract**

Disclosed are methods and systems for modifying access of a business intelligence report on a client computing device according to contextual information of a user. The method includes obtaining a context update message from a context acquisition model associated with the client computing device through one or more software interfaces provided by the context, based on the contextual information of the user, retrieving one or more security policies associated with the contextual information, applying the one or more security policies to the business intelligence report according to the contextual information of the user and displaying the business intelligence report on the client computing device to the user according to the one or more security policies.

## Description

### FIELD OF THE INVENTION

The invention generally relates to security rights of business intelligence reporting on mobile devices.

### BACKGROUND OF THE INVENTION

Business Intelligence (BI) generally refers to a category of software systems and applications used to improve business enterprise decision-making and governance. These software tools provide techniques for analyzing and leveraging enterprise applications and data. These tools are commonly applied to financial, human resource, marketing, sales, service provision, customer and supplier analyses. More specifically, these tools can include reporting and analysis tools to analyze, forecast and present information, content delivery infrastructure systems for delivery, storage and management of reports and analytics and integration tools to analyze and generate workflows based on enterprise systems. B1 tools work with data management systems, such as relational databases or On-Line Analytic Processing (OLAP) systems used to collect, store, and manage raw data and transactional enterprise systems that generate data.

Reporting tools and other business intelligence applications allow a user to explore business data by consolidating raw data from disparate sources, performing calculations on the data (e.g., aggregate, subtract, etc.) and specifying various views of the underlying data (e.g., specifying various dimensions and measures along which they would like to dissect data). In addition to having wide control over how to manipulate raw data to view the exact dimensions and measures of interest, business users want to be able to display reports whose underlying data can change based on contextual information.

Contextual information can take many different forms. It could be geographic (e.g., user location, location of an object of interest), some information descriptive of natural conditions (e.g., temperature variation) and other information that could define the context of use of the data and/or the device being used by the end user. Change in such contextual information can influence change in access given to the user on a BI application. However, interjecting such contextual information into reports today requires a manual intervention by the user. Thus, there is a need to automatically apply the last changes of contextual information to the BI data.

### SUMMARY OF THE INVENTION

Disclosed are methods and systems for modifying access of a BI report on a client computing device according to contextual information of a user. The method includes obtaining a context update message from a context acquisition model associated with the client computing device based on the contextual information of the user, retrieving one or more security policies associated with the contextual information, applying the one or more security policies to the By report according to the contextual information of the user and displaying the BI report on the client computing device to the user according to one or more security policies.

Additional features and advantages will be made apparent from the following detailed description of illustrated embodiments, which proceeds with reference to the accompanying drawings.

### BRIEF DESCRIPTION OF THE DRAWINGS

A better understanding of embodiments of the invention are illustrated by examples and not by way of limitation, the embodiments can be obtained from the following detailed description in conjunction with the following drawings, in which:
FIG. 1 is an exemplary block diagram illustrating a server and client system according to an embodiment of the invention.
FIG. 2 is a block diagram of an exemplary computer system for modifying an access of a BI report on a client computing device according to contextual information of a user.
FIG. 3 is a flow diagram illustrating an exemplary process for modifying access of a BI report on a client computing device according to contextual information of a user.
FIG. 4 illustrates a screen shot configuring an exemplary security policy according to an embodiment of the invention.
FIG. 5 illustrates a screen shot of adding a contextual tab into the edit restriction screen according to an embodiment of the invention.

### DETAILED DESCRIPTION

Data access permissions are granted for accessing BI reports on portable devices such as mobile phones, wireless networks and personal digital assistants (PDA).

The data access permissions are granted based on contextual information of the user. The contextual information may be a geographical location, radio frequency identifier (RFID) and/or temperature sensor variation associated with the user. The data access permissions are defined as security policies in a semantic layer. The semantic layer is an abstraction layer that allows access to data without knowing the underlying source. A universe is a specific form of a semantic layer that is a partial or total representation of the database, designed for a particular application or group of users. In one embodiment, the contextual information can be modeled as an entity of the semantic layer comprising details about the parameters of a context of user's interest. The security policies in the semantic layer include contextual information details where accessing the BI report is allowed and/or restricted.

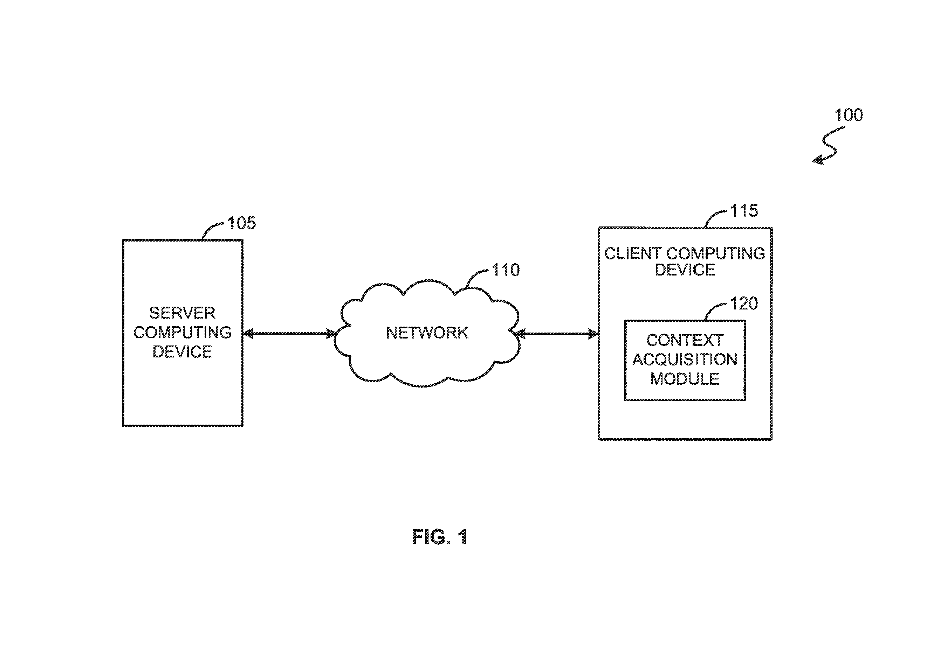

FIG. 1 is an exemplary block diagram illustrating a server and client system according to an embodiment of the invention. The block diagram 100 includes a server computing device 105, a network 110 and a client computing device 115. The server computing device 105 accepts requests or transmits responses associated with business information of an enterprise infrastructure. The server computing device 105 may also receive one or more streams of business information from a client computing device 115. The server computing device 105 communicates with the client computing device 115 through a network 110. The client computing device 115 includes a context acquisition module 120 to obtain contextual information. The client computing device 115 may include, but is not limited to, personal computers, portable devices like personal digital assistants (PDA), mobile phones and wireless devices. The network may include, but is not limited to, a local area network (LAN), wide area network (WAN), metropolitan area network (MAN), public switched telephone network (PSTN), Bluetooth network, internet, intranet and Ethernet. The context acquisition module 120 in the client computing device 115 may include, but is not limited to, a global positioning system (GPS), fingerprint reader, radio frequency identifier (RFID), Bluetooth, wired connection, and embedded camera.

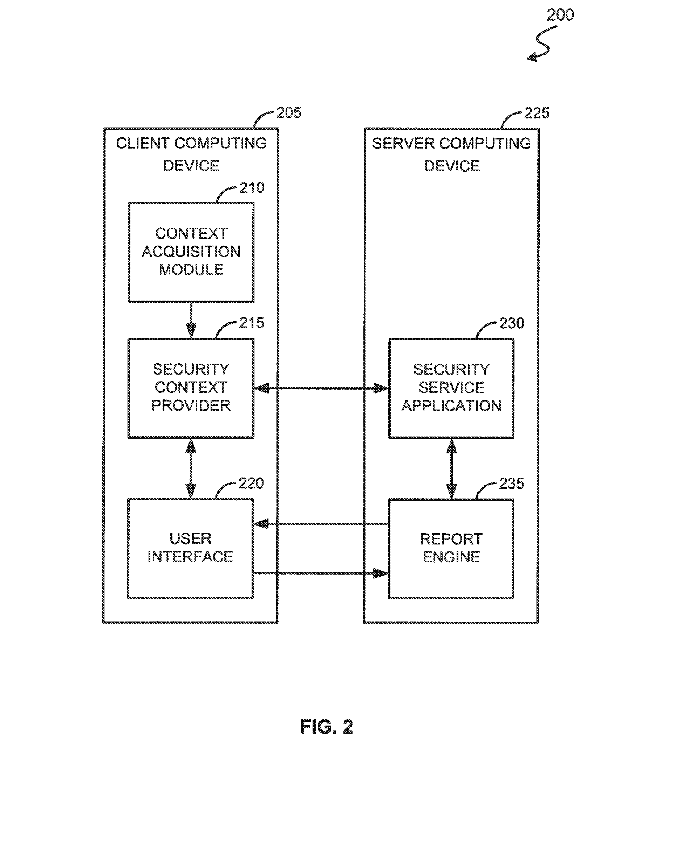

FIG. 2 is a block diagram of an exemplary computer system for modifying access of a BI report on a client computing device according to contextual information of a user. The system 200 includes a client computing device 205 and a server computing device 225. The client computing device 205 includes a context acquisition module 210, a security context provider 215 and a user interface 220. The server computing device 225 includes a security service application 230 and a report engine 235.

The client computing device 205 receives contextual information (e.g., based on a location of the user) acquired by the context acquisition module 210. The contextual information may include user position information expressed, for instance, in degrees of latitude and longitude. One or more software interfaces provided by the context acquisition module 210 retrieve the contextual information. The context acquisition module 210 updates the security context provider 215 with the contextual information. The security context provider 215, connected to the security service application 230, accordingly updates the contextual information on the security service application 230 located on the server computing device 225. A permanent connection is maintained between the security context provider 215 and the security service application 230 for real time transmission of contextual information. The security service application 230 configures one or more security policies according to the contextual information of the user. According to one embodiment, the security policies are configured by an administrator and are stored in the security service application 230.

The security policies include security profiles, the security profiles are a set of one or more security restrictions and security allowances that are applied to a BI report according to the contextual information of the user. The security policies are retrieved by the report engine 235 and are applied to the BI reports in the report engine 235. The BI report is displayed on the user interface 220 of the client computing device 205 according to the contextual information of the user.

In one embodiment, the security restrictions may be allowable user security rights and/or restricted user security rights. The allowable security rights allow the user to execute actions associated with a BI report (e.g., reading a BI report, editing specific portions of the BI report) according to the contextual information of the user. The restricted security rights blocks the user from executing actions according to the contextual information of the user (e.g., deleting a BI report).

In another embodiment, the security restrictions are an access level type security restriction or a row level type security restriction. In the access level type security restriction, user security rights provided are allowable security rights and restricted security rights. In the row level type security restriction, a filter is applied on the data itself. The filters contain values provided by the contextual information, which dynamically changes due to change in the contextual information. The change in the contextual information may be, but is not restricted to, change in GPS location, change in radio frequency identifier (RFID), temperature sensor variation, network connection disruption and so on. The security restriction may be specified for a user or a user group.

Queries are used to create, modify, retrieve and manipulate data in a data source, such as, a database, a data warehouse, a plurality of reports, and the like. A filter is a condition used to limit information retrieved from a data source to a subset of the whole result of an unfiltered query. Filters are usually expressed in the form of a logical expression that states the condition. Often, users of BI tools are interested in limited subsets of records in a data source, so filtering operations are common. Filtering transforms the data into a small set of information making it suitable for analysis. For each query containing business objects that have restrictions, at a query execution time, the latest values for the restriction filters are applied, these values being obtained from the context acquisition module 210.

In another embodiment, the security service application 230 could require the security context provider 215 to remove a BI report that is accessed on the client computing device if there is a change in the filter of the security restriction, which is used by one of the queries of the report in a restricted geographical location.

In yet another embodiment, the contextual information includes contextual identifiers as well as corresponding contextual values. The contextual values may be geographical location coordinates, temperature reading and so on. The contextual values and associated IDs (i.e., contextual identifiers) are obtained from the context acquisition module on the client computing device. The contextual values and contextual identifiers are used as a filter condition on a query defined in the semantic layer. The filter conditions may include, but are not limited to, coordinates provided by a global positioning system (GPS), modifying a BI report and so on.

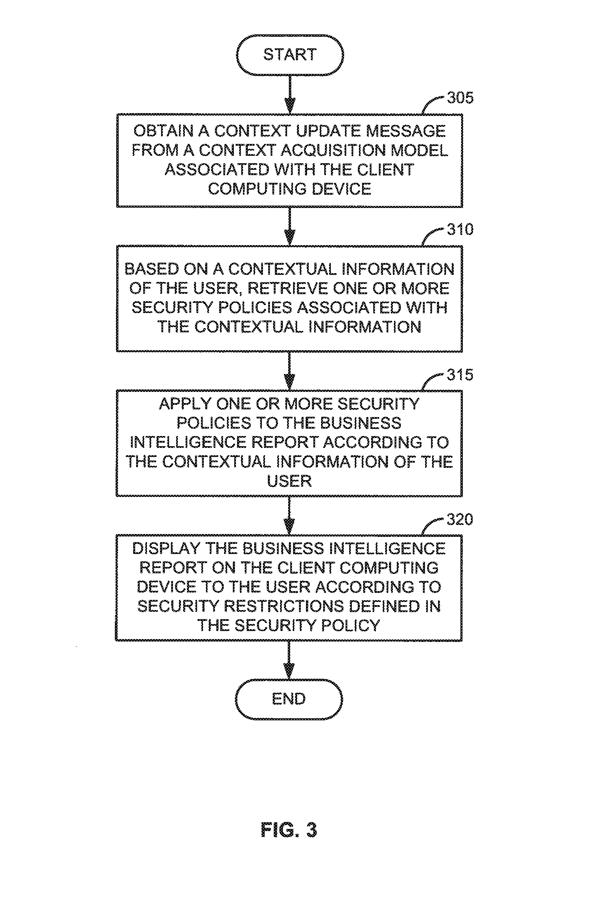

FIG. 3 is a flow diagram illustrating an exemplary process for modifying access of a BI report on a client computing device according to contextual information of a user. The method includes obtaining a context update message from a context acquisition module associated with the client computing device at process block 305. The context information is retrieved through one or more software interfaces provided by the context acquisition module. The context update message includes contextual information of the user. At process block 310, based on the contextual information of the user, one or more security policies associated with the contextual information are retrieved. At process block 315, the one or more security policies are applied to the BI report according to the contextual information of the user. At process block 320 the BI report on the client computing device is displayed to the user according to security restrictions configured in the security policy.

In an embodiment a user request is received to display a business intelligence report on the client computing device.

Consider a business scenario where the contextual information is a geographical location of a user. When the user is in a research laboratory the geographical location is acquired by a client computing device possessed by the user. The context acquisition module on the client computing device obtains the geographical location as a context update message. On acquiring the geographical location, a security policy associated with the geographical location is retrieved. The security policy has a security profile associated with the research laboratory. The security policy restricts deleting a BI report or editing a BI report in the research laboratory premises. The security policy allows reading a BI report in the research laboratory premises. The retrieved security policy is applied to the BI reports accessed on the client computing device. This security policy will allow and/or restrict the user according to the security rights configured in the security policy and the user contextual information. The filter used for enforcing this security policy is testing if the user device location is inside an area that corresponds to the geographical location of the research laboratory. When this security policy is enforced, the user can only read a BI report displayed to him on the user interface of the client computing device. In this business scenario the restricted security rights are deleting a BI report and editing the BI report in the research laboratory premises. The allowable security right is reading the BI report in the research laboratory premises.

Once the user comes out from the research laboratory the security policy associated with the research laboratory is removed and another security policy corresponding to the new geographical location of the user is applied and enforced.

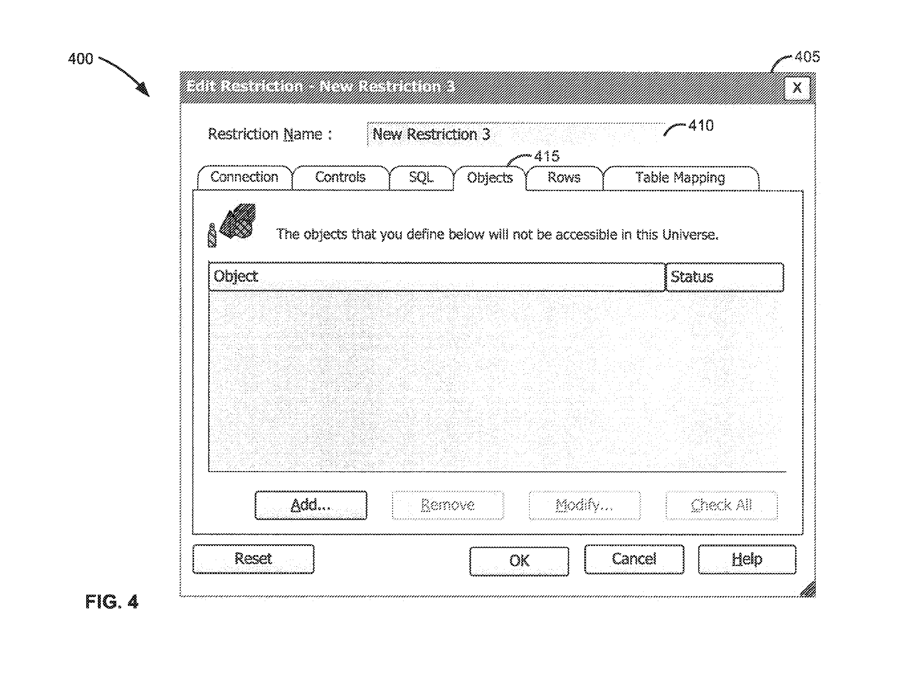

FIG. 4 illustrates a screen shot configuring an exemplary security policy according to an embodiment of the invention. In the business scenario 400, a security policy "New Restriction 3" 410 is added to the edit restriction screen 405. The new restriction is added by an administrator. The security policy "New Restriction 3" 410 is added into an object tab 415 of the edit restriction screen 405. The "New Restriction 3" 410 includes allowable security rights and restricted security rights configured by the administrator.

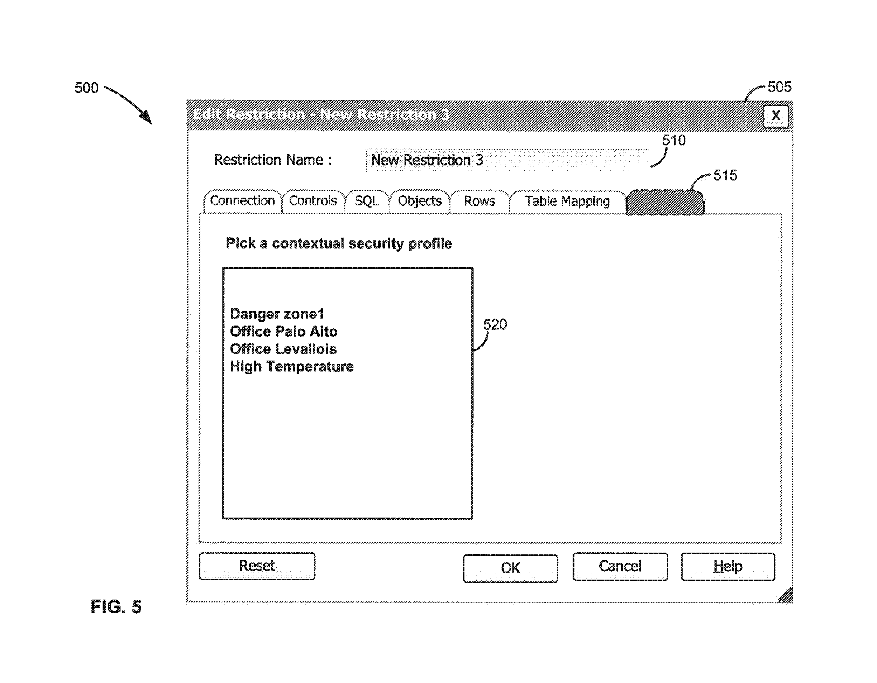

FIG. 5 illustrates a screen shot of adding a contextual tab into the edit restriction screen according to an embodiment of the invention. In business scenario 500, an edit restriction screen 505 is displayed. A contextual tab 515 is added into the edit restriction screen 505. The contextual tab 515 includes a contextual security profile associated with the "New Restriction 3" configured in 510. On selecting the contextual tab 515 a list of security profiles 520 are displayed. In an embodiment, if there are one or more contextual security profiles associated with a geographical location the administrator may be provided with an option to select a desired contextual security profile suitable for the contextual information of the user from the list of the contextual security profiles 520.

Elements of the invention may also be provided as a tangible machine-readable medium for storing the machine-executable instructions. The machine-readable medium may include, but is not limited to, flash memory, optical disks, CD-ROMs, DVD-ROMs, RAMs, EPROMs, EEPROMs, magnetic or optical cards, or other types of tangible machine-readable media suitable for storing electronic instructions.

It should be appreciated that reference throughout this specification to one embodiment or an embodiment means that a particular feature, structure or characteristic described in connection with the embodiment is included in at least one embodiment of the present invention. These references are not necessarily all referring to the same embodiment. Furthermore, the particular features, structures or characteristics may be combined as suitable in one or more embodiments of the invention.

Throughout the foregoing description, for the purposes of explanation, numerous specific details were set forth in order to provide a thorough understanding of the invention. It will be apparent, however, to one skilled in the art that the invention may be practiced without some of these specific details. For instance, the detailed description as set forth above includes descriptions of method steps. However, one skilled in the art will understand that the order of the steps set forth above is meant for the purposes of illustration only and the claimed invention is not meant to be limited only to the specific order in which the steps are set forth. Accordingly, the scope and spirit of the invention should be judged in terms of the claims which follow.

## Claims

1. An article of manufacture, comprising:
a machine readable storage medium comprising instructions which when executed by a machine cause the machine to perform operations comprising:
receiving a user request to display a business intelligence report on a client computing device;
obtaining a context update message from a context acquisition module associated with the client computing device through one or more software interfaces provided by the context acquisition module, the context update message comprising a contextual information of a user;
based on the contextual information of the user, applying the one or more security policies configured in a security service application of a server computing device to the business intelligence report accessed by the user on the client computing device; and
displaying the business intelligence report on the client computing device according to the one or more security policies.

2. The article of manufacture in claim 1, wherein applying the one or more security policies to the business intelligence report comprises allowing one or more user security rights associated with the one or more security policies.

3. The article of manufacture in claim 1, wherein applying the one or more security policies to the business intelligence report comprises restricting one or more user security rights associated with the one or more security policies.

4. A computer implemented method for modifying access of a business intelligence report on a client computing device according to a contextual information of a user, the method comprising:
obtaining a context update message from a context acquisition model associated with the client computing device through one or more software interfaces provided by the context acquisition module, the context update message comprising the contextual information of the user;
based on the contextual information of the user, retrieving one or more security policies associated with the contextual information;
applying the one or more security policies to the business intelligence report according to the contextual information of the user; and
displaying the business intelligence report on the client computing device to the user according to user rights.

5. The method of claim 4, wherein retrieving one or more security policies comprises retrieving the one or more security policies from a semantic layer.

6. The method of claim 4, wherein the one or more security policies associated with the geographical region are configured by an administrator.

7. The method of claim 4, wherein retrieving the one or more security policies comprises retrieving one or more security profiles.

8. The method of claim 7, wherein retrieving one or more security profiles comprises retrieving security restrictions.

9. The method of claim 8, wherein the security restriction comprises a level type security restriction, optionally wherein the level type security restriction comprises allowable security rights and/or restricted security rights.

10. The method of claim 8, wherein the security restriction comprises a row type security restriction.

11. The method of claim 4, wherein the contextual information comprises contextual identifiers and contextual values.

12. A computer system for accessing a business intelligence report on a client computing device according to a contextual information of a user, the computer system comprising:
a contextual acquisition module on a client computing device to acquire the contextual information of the user;
a security context provider in communication with the contextual acquisition module to receive the contextual information and transmit the contextual information;
a security service application on a server computing device in communication with the security context provider on the client computing device to configure one or more security policies;
a report engine in communication with the security service application to store one or more business intelligence reports and to apply one or more security policies to the business intelligence reports based on the contextual information of the user; and
a user interface in communication with the report engine to display the business intelligence reports to the user.

13. The computer system of claim 12, wherein the contextual acquisition module is operable to retrieve the contextual information through one or more software interfaces.

14. The computer system of claim 12, wherein the contextual acquisition module is operable to acquire contextual information as a context update message.

15. The computer system of claim 12, wherein the security context provider is operable to delete the business intelligence report if the business intelligence report is accessed in a restricted geographical location.
